Europäisches Patentamt

(19) **European Patent Office**

Office européen des brevets

(11) Numéro de publication: **0 290 324**
**B1**

(12) **FASCICULE DE BREVET EUROPEEN**

(45) Date de publication du fascicule du brevet: **22.11.90**

(51) Int. Cl.⁵: **B60S 1/40**

(21) Numéro de dépôt: **88401039.8**

(22) Date de dépôt: **28.04.88**

(54) Dispositif connecteur pour monter un étrier de balai d'essuie-glace et étrier équipé d'un tel dispositif connecteur.

(30) Priorité: **06.05.87 FR 8706382**

(43) Date de publication de la demande:
**09.11.88 Bulletin 88/45**

(45) Mention de la délivrance du brevet:
**22.11.90 Bulletin 90/47**

(84) Etats contractants désignés:
**DE ES GB IT**

(56) Documents cités:
**EP-A- 0 158 991**
**DE-A- 3 208 235**
**DE-A- 3 208 235**
**FR-A- 1 414 690**
**FR-A- 2 306 855**
**GB-A- 2 014 040**

(73) Titulaire: **VALEO SYSTEMES D'ESSUYAGE,**
**21-27 Boulevard Gambetta,**
**F-92130 Issy-les-Moulineaux(FR)**

(72) Inventeur: **Raymond, Bernard, 23, rue Cavendish,**
**F-75019 Paris(FR)**

(74) Mandataire: **Gamonal, Didier, Société VALEO Service**
**Propriété Industrielle 30, rue Blanqui, F-93406 Saint**
**Ouen(FR)**

ACTORUM AG

## Description

L'invention est relative à un dispositif connecteur pour monter un étrier de balai d'essuie-glace sur l'extrémité recourbée d'un bras, ledit étrier comportant une ouverture pour le passage de l'extrémité du bras, ouverture à travers laquelle s'étend un axe transversal pour une liaison articulée du bras et de l'étrier, dispositif connecteur du genre de ceux qui comprennent une pièce à profil, longitudinal sensiblement en forme de U à deux branches inégales, propre à se loger dans la concavité de l'extrémité recourbée du bras, la branche la plus longue est destinée à se trouver contre le bras tandis que la branche la plus courte est destinée à se trouver contre la partie recourbée du bras, ladite pièce comportant des moyens d'accrochage sur le bras, et des moyens de réception de l'axe agencés pour permettre d'introduire l'axe dans ces moyens de réception, et le retenir et des moyens de préhension propres à faire saillie transversalement par rapport au bras, comme mieux décrit dans les documents GB-A 2 014 040 et DE-A 2 742 022.

Cette disposition permet le montage et le démontage de l'étrier de balai d'essuie-glace en ne soulevant que légèrement le bras recourbé, ce qui est particulièrement intéressant dans le cas de bras non débrayables.

Les dispositifs connecteurs de ce genre, proposés jusqu'à ce jour, permettent un montage relativement facile de l'axe de l'étrier dans ledit connecteur. Le montage et le démontage de ce connecteur relativement au bras d'essuie-glace sont, par contre, plus difficiles. En outre, les pièces constituant les connecteurs ont des formes relativement compliquées pour accomplir les fonctions souhaitées; il en résulte un coût de fabrication relativement élevé. Ces pièces sont généralement realisées en matière plastique et leur coût de fabrication dépend, en grande partie, des frais de réalisation du moule, qui sont d'autant plus lourds que la forme est compliquée. La complexité des pièces conduit souvent à les rendre fragiles.

Le plus souvent, les moyens de déclipsage du connecteur par rapport au bras sont proéminents et peuvent être la cause de blessures ou, comme décrit dans DE-A 2 742 022 nécessitent de prévoir des dispositions particulières sur l'ouverture de l'étrier, telles que des évidements pour le passage desdits moyens de préhension, ce qui ne peut que compliquer l'élaboration dudit étrier en augmentant également son coût et en ne permettant pas un déverrouillage sûr du bras par rapport au connecteur.

L'invention a pour but, surtout, de fournir un dispositif connecteur du genre défini précédemment (GB-A 2 014 040) qui réponde mieux que jusqu'à présent aux diverses exigences de la pratique et qui, notamment, soit d'une réalisation simple et robuste permettant un montage et un démontage faciles et rapides non seulement de l'axe de l'étrier dans le connecteur, mais aussi du connecteur équipé de l'étrier sur l'extrémité recourbée du bras.

Selon l'invention un dispositif connecteur pour monter un étrier de balai d'essuie-glace sur l'extrémité recourbée d'un bras, du genre défini précédemment, est caractérisé en ce que la branche la plus longue porte à son extrémité les moyens de préhension et en ce que ladite branche a une longueur plus grande que la distance entre l'axe et l'un des bords transversaux de l'ouverture de manière à ce que, lorsque la pièce est montée sur l'axe de l'étrier, ladite branche s'étende, dans le sens longitudinal, au-delà du bord transversal, de sorte que les moyens de préhension se trouvent au-delà de l'ouverture.

Généralement, l'ouverture de l'étrier est limitée de part et d'autre par des parois en saillie par rapport au fond de l'étrier du côté opposé à la surface à essuyer, l'axe étant monté entre ces parois.

L'invention concerne également l'ensemble d'un balai d'essuie-glace et de sont étrier dont l'axe transversal est muni d'un dispositif connecteur tel que défini précédemment.

La description expose, mises à part les dispositions exposées ci-dessus, un certain nombre d'autres dispositions dont il sera plus explicitement question ci-après à propos de modes de réalisation particuliers de l'invention avec référence aux dessins ci-annexés, mais qui ne sont nullement limitatifs.

La figure 1, de ces dessins, est une vue en perspective d'un dispositif connecteur conforme à l'invention.

La figure 2 est une vue, en coupe longitudinale, du dispositif connecteur de la figure 1 prêt à être monté sur l'extrémité recourbée du bras, une partie de l'étrier du balai d'essuie-glace étant représentée.

La figure 3 est une coupe longitudinale d'une variante de réalisation, une partie du bras étant montrée.

La figure 4, enfin, est une coupe longitudinale d'une autre variante de réalisation.

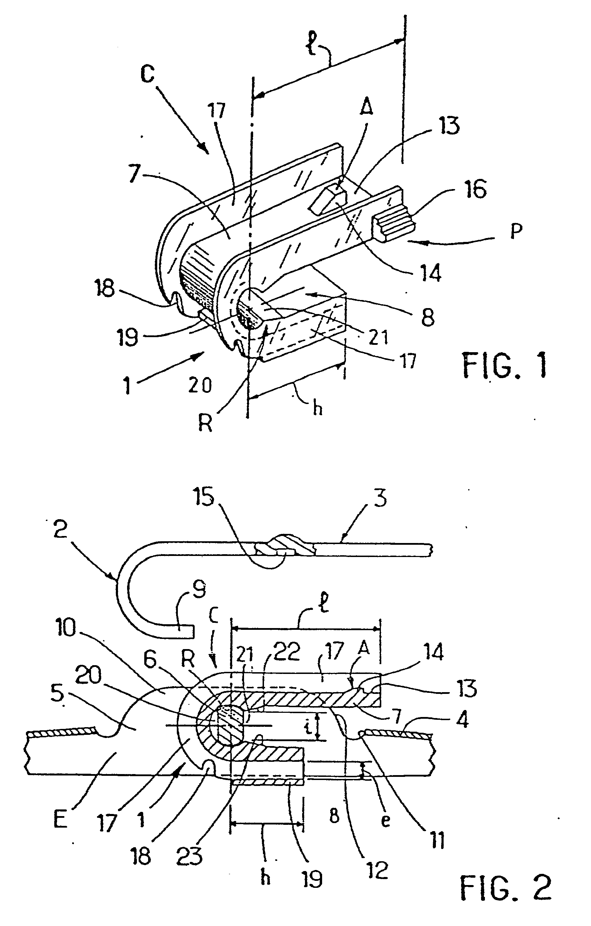

En se reportant aux dessins, notamment à la figure 1, on peut voir un dispositif connecteur C comprenant une pièce 1 à profil longitudinal sensiblement en forme de U à deux branches. Ce dispositif C est prévu pour le montage d'un étrier E (figure 2) de balai d'essuie-glace sur l'extrémité 2 d'un bras 3 d'essuie-glace. Cette extrémité 2 est recourbée vers une surface à essuyer (non représentée), de manière à présenter la forme d'un crochet, lequel se trouve situé entre le bras 3 proprement dit, et la surface à essuyer.

D'une manière classique, l'étrier E porte, en particulier par l'intermédiaire de palonniers (non représentés), une raclette en matière souple (non représentée) destinée à frotter contre la surface à essuyer. Cet étrier E est généralement constitué par un profilé à section transversale en forme de U tournant sa concavité vers la surface à essuyer. L'étrier E comporte, dans sa paroi 4 de fond, une ouverture 5, sensiblement à mi-longueur, pour le passage de l'extrémité 2 du bras. Un axe transversal 6 s'étend à travers cette ouverture 5, pour une liaison articulée du bras 3 et de l'étrier E.

La pièce 1 du dispositif connecteur est propre à se loger dans la concavité de l'extrémité recourbée 2 du bras; cette pièce 1 comprend des moyens d'accrochage A sur le bras et des moyens de réception R de l'axe 6, ces moyens de réception R s'ouvrant du côté opposé au fond du profil longitudinal en U de la pièce 1.

La branche 7 du U de la pièce 1, destinée à se trouver contre le bras 3, a une longueur l supérieure à la longueur h de l'autre branche 8 destinée à se trouver contre la partie recourbée 9 de l'extrémité 2 du bras. Comme visible sur la figure 2, les longueurs l et h sont comptées à partir d'un plan orthogonal aux branches 7 et 8 passant par la zone de raccordement entre le fond en demi-cercle de la pièce 1 et chaque branche.

L'ouverture 5 de l'étrier E est limitée, de part et d'autre, par des parois telles que 10 en saillie, du côté opposé à la surface à essuyer, par rapport au fond 4 de l'étrier. L'axe transversal 6 est disposé entre ces parois 10 et est fixé, notamment par sertissage, à chacune de ses extrémités dans une ouverture de ladite paroi. La longueur l de la branche 7 est avantageusement choisie de manière telle que, lorsque l'axe 6 est engagé dans la pièce 1, ladite branche 7 s'étend, dans le sens longitudinal, au-delà du bord transversal 11 de l'ouverture 5 et au-delà du bord arrière 12 des parois 10. Ainsi, l'extrémité arrière 13 de la branche 7 est située à l'extérieur des parois 10 et est facilement accessible.

Les moyens d'accrochage A comprennent au moins un premier organe d'accrochage formé par un cran 14 dans le cas des figures 1 et 2 situé vers l'extrémité 13 de la branche 7. Ce cran 14 fait saillie par rapport à la surface extérieure de la branche 7 ; il présente une surface à pente douce du côté correspondant au montage de la pièce 1 dans la concavité 2, et, de l'autre côté, une surface abrupte, sensiblement orthogonale à la branche 7, pour assurer l'accrochage sur le bras.

Le cran 14 est destiné à coopérer avec un organe complémentaire formé par un logement 15 prévu sur la surface intérieure du bras 3. Ce logement 15 peut être constitué par un embouti, auquel cas la surface extérieure du bras 3 présente un renflement comme dans le cas de la figure 2, ou par un crevé, ou par une ouverture débouchant sur la face extérieure du bras 3.

Les positions longitudinales du cran 14 et du logement 15 sont choisies de telle sorte que ces deux organes coopèrent lorsque le fond convexe en demi-cercle de la pièce 1 vient en appui contre le fond concave en demi-cercle de l'extrémité 2 recourbée.

La branche 7 la plus longue de la pièce 1 comporte, à son extrémité arrière 13, des moyens de préhension P propres à faire saillie transversalement par rapport au bras. Ces moyens de préhension P sont avantageusement constitués, de chaque côté, par un bossage 16 (figure 1), qui se trouve à l'extérieur des parois 10 lorsque la pièce 1 est montée sur l'axe 6 (figure 2).

La pièce 1 comporte, de chaque côté, une bordure 17 constituant un flasque sensiblement orthogonal au plan des branches 7, 8 de la pièce. Les flasques 17 ainsi formés sont destinés à encadrer l'extrémité 2 du bras.

Les moyens de préhension P s'inscrivent dans l'encombrement hors tout des flasques 17. Autrement dit, suivant une direction orthogonale au plan moyen de la branche 7, les moyens P ne font pas saillie au-delà des bords des flasques 17.

Une échancrure 18 est prévue dans chaque flasque 17, vers la zone de raccordement entre la partie convexe du flasque et la partie rectiligne pour donner une élasticité suffisante à la pièce 1, en vue de l'entrée de l'axe 6 dans les moyens de réception R. Cette échancrure 18 est avantageusement prévue du côté de la petite branche 8 du U.

Les flasques 17 peuvent être reliés transversalement dans la zone de cette petite branche 8 du U, par un pontet 19 (figure 2) écarté d'une distance e suffisante par rapport à la surface extérieure de la branche 8 pour permettre le passage de la partie 9 recourbée du bras 3.

Les moyens de réception R prévus dans la pièce 1 sont constitués par un logement 20 cylindrique de section transversale circulaire ouverte vers l'arrière suivant une entrée 21. Le diamètre du logement 20 est égal à celui de l'axe 6 ; par contre, la dimension transversale i de l'entrée 21 est inférieure au diamètre de l'axe 6.

L'introduction de l'axe 6 dans le logement 20 est obtenue par déformation élastique de la pièce 1 qui, en se refermant, assure un clipsage de l'axe 6 dans le logement 20.

Une zone de guidage à l'entrée 21 est prévue sur les faces internes des branches 7 et 8 ; cette zone de guidage est limitée par deux surfaces 22,23 convergeant en direction de ladite entrée 21.

Le montage de la pièce 1 sur l'étrier E résulte immédiatement des explications précédentes. Ce montage est obtenu en engageant l'axe 6 entre les faces internes des branches 7 et 8 et en exerçant une poussée suffisante pour provoquer la déformation élastique de la pièce 1 parvenue en contact des faces 22 et 23 avec l'axe 6.

Lorsque l'axe 6 est entré dans le logement 20, la pièce 1 reprend sa forme normale et l'axe 6 est retenu dans cette pièce. On peut faire sortir l'axe 6 en exerçant un effort suffisant pour provoquer une nouvelle déformation de la pièce 1.

Le montage de l'ensemble, formé par l'étrier E équipé de la pièce l, sur le bras 3, s'effectue en faisant passer l'étrier et la pièce 1 sous le bras 3, de telle sorte que la pièce 1 se trouve en arrière de l'extrémité recourbée 2.

On introduit cette extrémité recourbée 2 dans l'ouverture 5 de l'étrier puis on exerce une poussée sur l'étrier et sur la pièce 1 pour l'engager par translation dans la concavité de l'extrémité 2, jusqu'à ce que le cran 14 vienne s'accrocher dans le logement 15.

La partie recourbée 9 vient se loger dans l'espace compris entre le pontet 19 et la branche 8.

Il est à noter que la mise en place de l'étrier équipé de la pièce 1 peut s'effectuer sans avoir pratiquement à soulever le bras 3 pour l'écarter de la surface à essuyer.

Le démontage s'effectue aisément en agissant sur les bossages 16 pour repousser la branche 7 et dégager le cran 14 du logement 15. Simultanément, on exerce une traction vers l'arrière pour dégager la pièce 1 de l'extrémité recourbée 2.

Ce démontage est facile car les bossages 16 qui se trouvent de part et d'autre du bras 3 sont directement accessibles, du côté éloigné de la surface à essuyer.

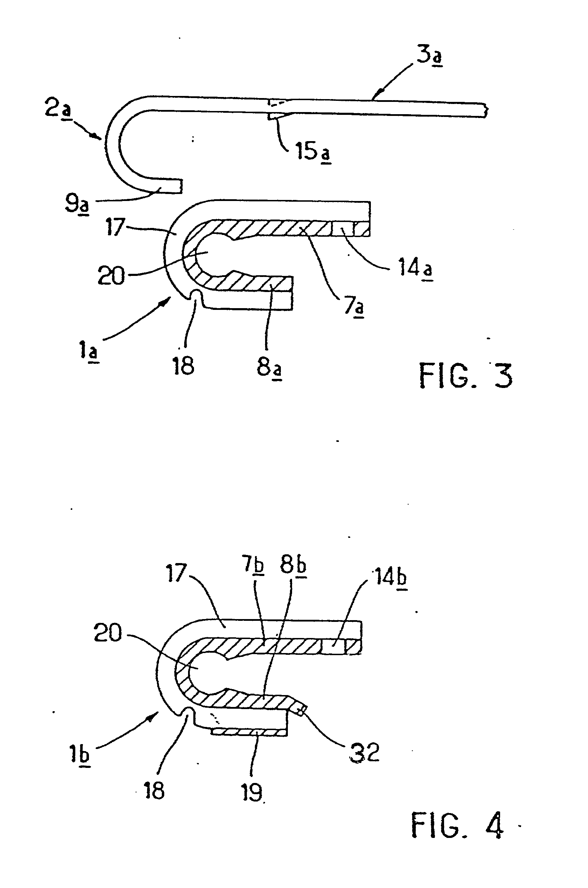

La figure 3 montre une variante de réalisation selon laquelle la pièce 1a comporte un moyen d'accrochage formé par une lumière 14a prévue à l'extrémité de la branche la plus longue. Le moyen d'accrochage complémentaire, prévu sur le bras 3a, est formé par un cran 15a, notamment obtenu par emboutissage, faisant saillie sur la surface intérieure du bras.

Dans le cas de la figure 3, la pièce 1a ne comporte pas de pontet reliant les flasques au niveau de la branche la plus courte.

Les parties de la pièce 1a identiques à des parties déjà décrites à propos des figures 1 et 2 sont désignées par les mêmes chiffres de référence, éventuellement suivis de la lettre a, sans que leur description soit reprise.

La variante de réalisation de la figure 4 montre une pièce 1b de dispositif connecteur comportant un moyen d'accrochage formé par une lumière 14b semblable à celle prévue sur la figure 3.

La pièce 1b comporte un pontet 19 semblable à celui des figures 1 et 2.

L'extrémité arrière de la branche la plus courte 8b comporte un prolongement formé par une languette 32 inclinée vers l'extérieur.

La présence d'un pontet 19 exclut la possibilité d'un accrochage supplémentaire de la branche la plus courte sur la face interne de la partie recourbée 9 du bras.

Par contre, dans le cas de la variante de la figure 3, il serait possible de prévoir un moyen d'accrochage vers l'extrémité de la branche la plus courte 8a, sur la surface extérieure de cette branche, pour coopérer avec un moyen d'accrochage complémentaire prévu sur la face interne de la partie 9a du bras. Dans ce cas, la branche 8a serait prolongée par une languette semblable à la languette 32 de la figure 4 pour permettre de séparer le moyen d'accrochage de la pièce 1a du moyen complémentaire prévu sur le bras. Le moyen d'accrochage de la pièce 1a pourrait être constitué par un cran et le moyen complémentaire, prévu sur la partie 9a du bras, pourrait être constitué par une lumière ou un évidement.

Quelle que soit la variante, la pièce du dispositif connecteur conforme à l'invention est d'une réalisation simple et robuste. Les formes de la pièce ne sont pas compliquées de telle sorte que sa réalisation en matière plastique par moulage ne nécessite pas un moule trop compliqué et trop coûteux. En outre, cette pièce ne présente pas de zones particulièrement fragiles.

Le montage et le démontage de l'axe de l'étrier s'effectuent facilement. De même, le montage et le démontage de la pièce sur le bras d'essuie-glace s'effectuent aisément.

## Revendications

1. Dispositif connecteur (C) pour monter un étrier (E) de balai d'essuie-glace sur l'extrémité (2) recourbée d'un bras (3), ledit étrier comportant une ouverture (5) pour le passage de l'extrémité du bras, ouverture à travers laquelle s'étend un axe transversal (6) pour une liaison articulée du bras et de l'étrier, ce dispositif connecteur comprenant une pièce (1) à profil longitudinal sensiblement en forme de U à deux branches inégales (7, 8), propre à se loger dans la concavité de l'extrémité recourbée du bras de manière à ce que la branche la plus longue (7) se trouve contre le bras (3), tandis que la branche la plus courte est destinée à se trouver contre la partie recourbée du bras (3), ladite pièce comportant des moyens d'accrochage (A) sur le bras (3), des moyens de réception de l'axe et des moyens de préhension (P) propres à faire saillie transversalement par rapport au bras (3), caractérisé en ce que la branche la plus longue (7) porte à son extrémité (13) les moyens de préhension (P) et en ce que ladite branche a une longueur (l) plus grande que la distance entre l'axe (6) et l'un des bords transversaux (11) de l'ouverture (5) de manière à ce que, lorsque la pièce (1) est montée sur l'axe (6) de l'étrier, ladite branche (7) s'étende, dans le sens longitudinal, au-delà du bord transversal (11), de sorte que les moyens de préhension (P) se trouvent au-delà de l'ouverture (5).

2. Dispositif selon la revendication 1, caractérisé par le fait qu'il comporte, de chaque côté de la pièce (1), une bordure (17) constituant un flasque sensiblement orthogonal au plan des branches du U, les flasques ainsi formés étant destinés à encadrer l'extrémité (2) du bras, une échancrure (18) étant prévue dans chaque flasque au niveau de la zone de raccordement entre une partie convexe et une partie rectiligne, pour donner une élasticité suffisante à la pièce en vue de l'entrée de l'axe (6) de l'étrier dans des moyens de réception (R) de la pièce.

3. Dispositif selon la revendication 2, caractérisé par le fait que les moyens de préhension (P) s'inscrivent dans l'encombrement hors tout des flasques (17).

4. Dispositif selon la revendication 2 ou 3, caractérisé par le fait que l'échancrure (18) est prévue du côté de la petite branche (8) du U.

5. Dispositif selon l'une quelconque des revendications 3 à 4, caractérisé par le fait que les flasques (17) sont reliés transversalement, dans la zone de la petite branche (8) du U, par un pontet (19).

6. Dispositif selon l'une quelconque des revendications précédentes, dans lequel les moyens de réception (R) comprennent un logement (20) dont l'entrée a une dimension transversale (i) inférieure au diamètre de l'axe (6) de l'étrier, caractérisé par le fait qu'une zone de guidage à cette entrée est prévue et limitée par deux surfaces (22, 23) convergeant en direction de ladite entrée.

7. Dispositif selon l'une quelconque des revendications précédentes, caractérisé par le fait que les moyens de préhension (P) sont constitués, de chaque côté, par un bossage (16).

8. Ensemble d'un balai d'essuie-glace et de son étrier (E) dont l'axe transversal (6) est muni d'un dispositif connecteur (C) conforme à l'une quelconque des revendications précédentes.

**Patentansprüche**

1. Verbindungsvorrichtung (C) zur Anbringung eines Scheibenwischerbügels (E) am umgebogenen Ende (2) eines Arms (3), wobei der genannte Bügel eine Öffnung (5) für den Durchtritt des Armendes aufweist, durch welche eine Querachse (6) für eine gelenkige Verbindung zwischen Arm und Bügel verläuft und wobei diese Verbindungsvorrichtung ein im wesentlichen U-förmiges Stück (1) mit Längsprofil und mit zwei ungleichen Schenkeln (7, 8) enthält, welches in den Hohlraum des umgebogenen Endes des Arms in der Weise eingesetzt werden kann, daß der längere Schenkel (7) an dem Arm (3) anliegt, während der kürzere Schenkel dazu bestimmt ist, am umgebogenen Teil des Arms (3) anzuliegen, wobei das genannte Stück Mittel zur Einhakung (A) am Arm (3) sowie Mittel zur Aufnahme der Achse und Griffmittel (P) aufweist, die im Verhältnis zum Arm (3) in Querrichtung überstehen können, dadurch gekennzeichnet, daß der längere Schenkel (7) an seinem Ende (13) die Griffmittel (P) trägt und daß der genannte Schenkel eine Länge (l) hat, die größer ist als der Abstand zwischen der Achse (6) und einem der Querränder (11) der Öffnung (5), so daß, wenn das Stück (1) an der Achse (6) des Bügels angebracht ist, sich der genannte Schenkel (7) in Längsrichtung über den Querrand (11) hinaus erstreckt und sich die Griffmittel (P) jenseits der Öffnung (5) befinden.

2. Vorrichtung nach Anspruch 1, dadurch gekennzeichnet, daß sie auf jeder Seite des Stücks (1) einen Rand (17) aufweist, der einen Flansch bildet, welcher im wesentlichen orthogonal zur Ebene der Schenkel des U-Stücks verläuft, während die so gebildeten Flansche dazu bestimmt sind, das Ende (2) des Arms einzufassen, wobei in jedem Flansch in Höhe der Anschlußzone zwischen einem konvexen Teil und einem geradlinigen Teil eine Aussparung (18) vorgesehen ist, um dem Stück eine ausreichende Elastizität für den Eintritt der Achse (6) des Bügels in Aufnahmemittel (R) des Stücks zu verleihen.

3. Vorrichtung nach Anspruch 2, dadurch gekennzeichnet, daß die Griffmittel (P) in den Gesamtabmessungen der Flansche (17) enthalten sind.

4. Vorrichtung nach Anspruch 2 oder 3, dadurch gekennzeichnet, daß die Aussparung (18) auf der Seite des kleinen U-Schenkels (8) vorgesehen ist.

5. Vorrichtung nach einem der Ansprüche 3 bis 4, dadurch gekennzeichnet, daß die Flansche (17) im Bereich des kleinen U-Schenkels (8) in Querrichtung durch eine Brücke (19) verbunden sind.

6. Vorrichtung nach einem der vorherigen Ansprüche, bei der die Aufnahmemittel (A) einen Sitz (20) enthalten, dessen Eintritt eine Querabmessung (i) aufweist, die geringer ist als der Durchmesser der Achse (6) des Bügels, dadurch gekennzeichnet, daß eine Führungszone zu diesem Eintritt vorgesehen und durch zwei Flächen (22, 23) begrenzt ist, die in Richtung des genannten Eintritts zusammenlaufen.

7. Vorrichtung nach einem der vorherigen Ansprüche, dadurch gekennzeichnet, daß die Griffmittel (P) auf jeder Seite aus einem Vorsprung (16) bestehen.

8. Einheit bestehend aus einem Scheibenwischerblatt und dem betreffenden Bügel (E), dessen Querachse (6) mit einer Verbindungsvorrichtung (C) nach einem der vorherigen Ansprüche versehen ist.

**Claims**

1. A connecting device (C) for mounting a stirrup (E) of a windscreen wiper blade on the hooked end (2) of an arm (3), the said stirrup having an opening (5) for accommodating the end of the arm, with a transverse pin (6) extending through the said opening to provide a pivoted coupling between the arm and the stirrup, the said connecting device including a member (1) of substantially U-shaped longitudinal profile and having two unequal branches (7, 8), adapted to rest in the concavity of the hooked end of the arm in such a way that the longer one (7) of the branches lies against the arm (3), while the shorter branch is adapted to lie against the hooked portion of the arm (3), the said member including means (A) for mating with the arm (3), reception means for receiving the pin, and finger-grip means (P) which are adapted to project transversely with respect to the arm (3), characterised in that the longer branch (7) carries the finger-grip means (P) at its end (13), and in that the said branch has a length (l) greater than the distance between the axis of the pin (6) and one of the transverse edges (11) of the opening (5), in such a way that, when the member (1) is mounted on the pin (6) of the stirrup, the said branch (7) extends longitudinally beyond the transverse edge (11) so that the finger-grip means (P) lie beyond the opening (5).

2. A device according to claim 1, characterised by the fact that it includes, on each side of the member (1), a side element (17) constituting a cheek which is substantially orthogonal to the plane of the branches of the U, the cheeks thus formed being adapted to enclose the end (2) of the arm, with a slot (18) being provided in each cheek in the region of the junction zone between a convex portion and a rectilinear portion, so as to confer sufficient elasticity to the member to permit the entry of the pin (6) of the stirrup into the reception means (R) of the member.

3. A device according to claim 2, characterised by the fact that the finger-grip means (P) lie within the overall envelope defined by the cheeks (17).

4. A device according to claim 2 or claim 3, characterised by the fact that the slot (18) is formed on the same side of the U as the small branch (8).

5. A device according to either one of claims 3 and 4, characterised by the fact that the cheeks (17) are connected transversely by a bridge element (19) in the vicinity of the small branch (8) of the U.

6. A device according to any one of the preceding claims, in which the reception means (R) include a housing portion (20), the entry of which has a transverse dimension (i) which is smaller than the diameter of the pin (6) of the stirrup, characterised by the fact that the said entry is provided with a guide zone which is delimited by two surfaces (22, 23) converging towards the said entry.

7. A device according to any one of the preceding claims, characterised by the fact that the finger-grip means (P) comprise a lug element (16) on either side.

8. The assembly of a windshield wiper blade with its stirrup (E), the transverse pivot pin (6) of which is provided with a connecting device (C) in accordance with any one of the preceding claims.

FIG. 1

FIG. 2

FIG. 3

FIG. 4